# FASCICULE DE BREVET EUROPEEN

(11) **EP 0 511 104 B1**
(45) Date de publication et mention de la délivrance du brevet: **07.12.1994**
(21) Numéro de dépôt: 92401160.4
(22) Date de dépôt: 23.04.1992
(51) Int. Cl.: B60S 1/52

(54) **Dispositif de lavage de la glace d'un projecteur de véhicule automobile**
Waschvorrichtung für Abdeckscheiben von Kraftfahrzeugleuchter
Device for washing the headlight lens of a motor vehicle

(30) Priorité: 25.04.1991 FR 9105115
(43) Date de publication de la demande: 28.10.1992
(73) Titulaire: VALEO VISION, 93000 Bobigny (FR)
(72) Inventeur: Camier, Jean-Pierre, F-93000 Bobigny (FR); Bigot, Bernard, F-95120 Ermont (FR)
(74) Mandataire: Martin, Jean-Jacques

(56) Documents cités:
- EP-A- 0 262 402
- FR-A- 2 523 909

## Description

La présente invention concerne d'une façon générale les dispositifs de lavage des glaces de projecteurs de véhicules automobiles.

Classiquement, un tel dispositif de lavage comprend une buse ou gicleur alimenté en liquide de lavage sous pression et disposé de façon fixe à une certaine distance en avant et au-dessous de la glace du projecteur. Ainsi on incorpore habituellement un tel gicleur dans le bouclier ou pare-chocs avant du véhicule.

Il est bien connu par ailleurs que, pour obtenir une efficacité de lavage maximale, le gicleur doit être situé aussi loin que possible en avant de la glace du projecteur, de manière à ce que les gouttelettes de liquide frappent la glace avec un angle d'incidence aussi élevé que possible par rapport au plan de ladite glace. Et l'inclinaison des glaces de projecteurs modernes, qui doivent épouser la forme plongeante de l'avant des véhicules, nécessite un éloignement des gicleurs vers l'avant encore plus important. Ainsi de tels gicleurs se retrouvent classiquement incorporés à des butoirs rapportés sur les pare-chocs, ce qui cause des inconvénients en matière de sécurité, d'aérodynamisme et d'esthétique.

On a déjà proposé, pour pallier ces limitations, un porte-gicleur escamotable, du type comprenant un vérin dont la tige intérieure mobile porte à son extrémité libre le gicleur. La chambre du vérin est alimentée directement par l'arrivée du liquide de lavage, et la pression dudit liquide provoque initialement l'actionnement dudit vérin, pour amener le gicleur en saillie vers l'avant par le déplacement de la tige, puis l'alimentation du gicleur avec le liquide pour effectuer l'aspersion de la glace. Les brevets FR-A-2 523 909 et EP-A-0 262 402 enseignent de tels dispositifs.

Cependant ces porte-gicleurs connus présentent un certain nombre d'inconvénients. De par leur construction, la zone d'étanchéité entre les deux pièces mobiles l'une par rapport à l'autre que constituent le cylindre du vérin et sa tige est exposée vers l'avant du véhicule, d'où un risque de détérioration important pouvant conduire à des fuites de liquide de lavage ou encore à un blocage de la tige. Le dispositif du brevet européen précité (EP-A-0 262 402) comporte, outre un joint d'étanchéité entre le vérin et la tige, un soufflet de protection venant entourer complètement la tige du vérin dans sa partie extérieure au cylindre. Le coût de revient est donc accru, et un tel soufflet s'avère inesthétique.

En outre, ces deux dispositifs connus nécessitent des moyens compliqués pour assurer l'expansion initiale du vérin sans que le gicleur soit alimenté en liquide sous pression, puis l'alimentation du gicleur seulement une fois que la tige du vérin et le gicleur porté par elle ont atteint la position requise.

La présente invention vise à pallier ces inconvénients de la technique antérieure et à proposer un dispositif porte-gicleur dont les moyens d'étanchéité soient beaucoup plus efficaces et beaucoup mieux protégés de l'environnement extérieur que dans la technique antérieure. Un autre objet de l'invention est d'assurer l'alimentation du gicleur en liquide de lavage, après qu'il a été amené en position de travail par la pression dudit liquide, d'une manière extrêmement simple et économique.

Elle concerne à cet effet un dispositif de lavage de la glace d'un projecteur de véhicule automobile, du type comportant un gicleur monté sur un porte-gicleur escamotable et alimenté sélectivement par une source de liquide de lavage sous pression, le porte-gicleur comportant une chambre à volume variable définie par un élément fixe et un élément mobile capable de coulisser par rapport à l'élément fixe et portant le gicleur, avec un espace intérieur de l'élément mobile en communication avec le gicleur, un moyen de rappel élastique opérant entre l'élément fixe et l'élément mobile, l'alimentation de ladite chambre à volume variable en liquide de lavage sous pression provoquant initialement le mouvement de l'élément mobile à l'encontre du moyen de rappel jusque dans une position déployée puis l'application du liquide de lavage au gicleur, l'élément fixe comprenant un tube ouvert à une extrémité libre et relié à la source de liquide de lavage sous pression à son extrémité opposée (Dispositif du type divulgué par FR-A-2 523 909 ou EP-A-0 262 402), caractérisé en ce que l'élément mobile comprend un corps essentiellement fermé, dont un espace intérieur est en communication avec le gicleur et est délimité par une première partie disposée à l'extérieur du tube dans une relation d'étanchéité avec sa surface extérieure et par une deuxième partie capable de pénétrer dans le tube pour assurer son obturation et de se dégager du tube sous l'action du liquide de lavage sous pression pour établir une communication entre l'intérieur du tube et ledit espace intérieur.

Divers modes de réalisation de l'invention sont précisés dans les revendications 2 à 11.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
la figure 1 est une vue d'ensemble schématique d'un dispositif lave-glace à porte-gicleur escamotable selon l'invention,
la figure 2 est une vue de détail en coupe axiale verticale du porte-gicleur du dispositif de la figure 1, dans une première position, et
la figure 3 est une vue semblable dudit porte-gicleur, dans une seconde position.

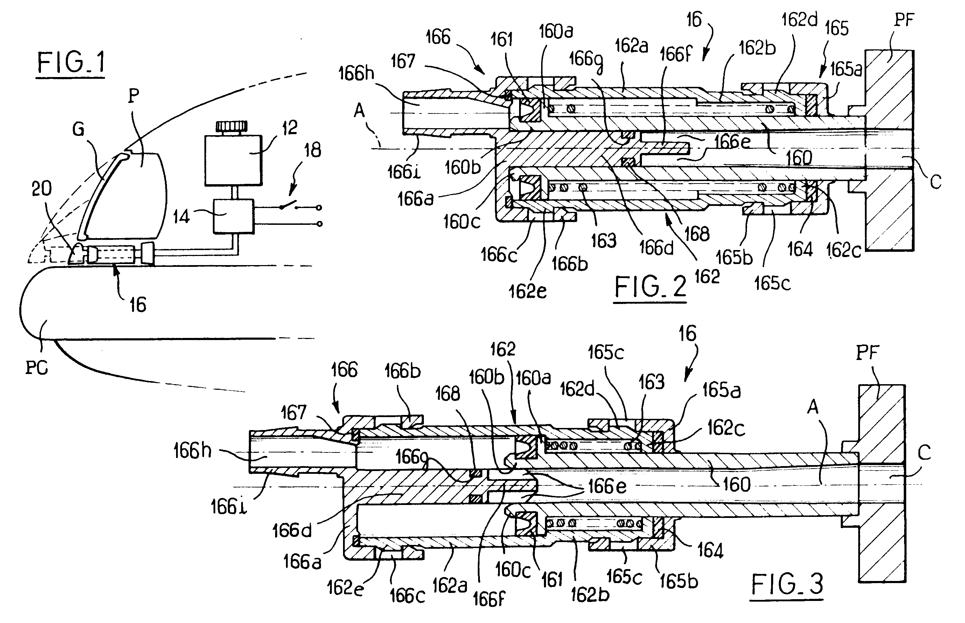

En référence tout d'abord à la figure 1, on a représenté un dispositif de lavage de la glace d'un projecteur qui comprend, de façon classique en soi, un réservoir 12 de liquide de lavage, une pompe 14 reliée en amont au réservoir et en aval à un porte-gicleur escamotable 16, et un interrupteur 18 tel qu'un relais commandé depuis l'habitacle du véhicule pour la mise en route et l'arrêt du dispositif par l'alimentation électrique sélective de la pompe, à l'initiative du conducteur.

Le porte-gicleur escamotable porte à son extrémité tournée vers l'avant un gicleur 20, qui peut être de tout type approprié, et est monté dans le présent exemple entre le bord inférieur de la glace G du projecteur P du véhicule et le pare-chocs PC. Bien entendu, il peut être disposé en tout autre emplacement approprié, et notamment incorporé au pare-chocs.

Lorsque la pompe 14 n'est pas alimentée en électricité, aucune pression de liquide de lavage n'est appliquée au porte-gicleur 16, et celui-ci occupe alors la position escamotée représentée en traits pleins sur la figure 1, dans laquelle le gicleur est sensiblement à l'aplomb du bord inférieur de la glace.

Lorsque la pompe est alimentée et que le liquide de lavage sous pression est appliqué au porte-gicleur, ce dernier, comme on le verra en détail dans la suite, est déployé pour amener le gicleur 20 dans une position située en avant de la glace G (position illustrée en tiretés sur la figure 1).

En référence maintenant aux figures 2 et 3, on va décrire en détail une forme de réalisation préférée du porte-gicleur 16.

Un tube ou tige creuse 160 d'axe essentiellement horizontal est fixé à une extrémité (à droite sur les figures) sur une partie fixe appropriée PF du véhicule, qui comporte un canal C d'amenée du liquide de lavage débouchant dans le tube.

A son extrémité opposée (à gauche), le tube comporte un collet périphérique 160a en saillie vers l'extérieur, au delà duquel le tube présente une partie de diamètre réduit 160b se terminant par un bourrelet 160c créant un léger accroissement terminal du diamètre extérieur. Entre le collet 160a et le bourrelet 160c est immobilisé un joint d'étanchéité 161 de section générale en forme de "U", comportant deux lèvres s'étendant dans la direction opposée au collet.

Le diamètre intérieur du tube 160 est de préférence constant sur toute sa longueur.

Une pièce 162 en forme générale de manchon s'étend coaxialement avec la tige 160 et comporte une première partie 162a dont le diamètre intérieur est légèrement supérieur au diamètre extérieur du collet 160a et une deuxième partie 162b sont le diamètre intérieur est légèrement inférieur audit diamètre extérieur. Ladite partie 162 se referme sur la tige 160 à l'extrémité libre du manchon, par une partie radiale 162c comportant une ouverture circulaire de diamètre sensiblement égal au diamètre de ladite tige. Un ressort hélicoïdal de compression 163, convenablement taré est logé entre la deuxième partie 162b du manchon et la tige 160, en s'appuyant à une première extrémité sur la face du collet 160a opposée au joint 161 et à la seconde extrémité sur la partie radiale 162c du manchon.

L'étanchéité entre la tige et le manchon est assurée par un joint d'étanchéité 164 qui est appliqué contre la face extérieure de la partie radiale 162c du manchon et qui est mis en compression par un capuchon 165 comportant une partie radiale 165a traversée par la tige 160 et une partie cylindrique axiale 165b comportant des ouvertures 165c dans lesquelles sont engagées des dents de verrouillage 162d prévues par exemple d'un seul tenant en saillie à la surface extérieure de la deuxième partie 162b du manchon. De préférence, l'assemblage du capuchon sur le manchon s'effectue à force, avec expansion élastique de la partie 165b du capuchon jusqu'à ce que les dents 162d pénètrent dans les ouvertures 165c. Pour faciliter ce mouvement, les dents comportent des rampes sur leur côté tourné vers la droite sur les figures.

Sur l'extrémité libre de la partie 162a du manchon est fixé un couvercle 166 comportant une partie radiale d'obturation 166a et une partie cylindrique axiale 166b comportant des ouvertures 166c dans lesquelles sont engagées des dents 162e prévues d'un seul tenant et en saillie sur la face extérieure de la première partie 162a du manchon. De même que pour le capuchon, le couvercle 166 se met en place à force, avec expansion élastique de sa partie 166b jusqu'à ce que les dents 162e pénètrent dans les ouvertures 166c.

Un joint d'étanchéité 167 est prévu entre la face terminale du manchon et le couvercle, en étant bloqué en position par une nervure circulaire prévu sur la face intérieure de la partie 166a du couvercle.

A partir de la zone centrale de la partie 166a s'étend axialement vers l'intérieur (vers la droite sur les figures) une tige pleine 166d dont le diamètre est sensiblement égal au diamètre intérieur du tube 160. A son extrémité libre, la tige 166d comporte par exemple quatre échancrures 166e séparées par des cloisons axiales 166f définissant en section un motif cruciforme, prolongeant la tige 166d et précisément inscrites dans la section circulaire de ladite tige. Les cloisons 166f ont de préférence des bords d'extrémité libre inclinés comme illustré, de manière à faciliter la pénétration de la tige 166d dans le tube 160 lors de la mise en place du couvercle 166 comme précité.

La tige 166d comporte par ailleurs, à proxmité de son extrémité côté échancrures, une gorge périphérique 166g recevant un joint d'étanchéité 168 tel qu'un joint torique.

On observera que la longueur axiale de la deuxième partie 162d du manchon et la longueur de la tige 166d sont déterminées de telle sorte que, lorsque le collet 160a du tube 160 vient en butée contre l'épaulement intérieur du manchon séparant ses première et deuxième parties, les cloisons terminales 166f de la tige s'étendent seulement partiellement à l'intérieur du tube 160, laissant les échancrures 166e que ces cloisons délimitent établir une communication entre l'intérieur du tube et la cavité définie entre la première partie 162a du manchon et la tige 166d.

Enfin un canal 166h s'étend vers l'extérieur (vers la gauche sur les figures) à partir de la partie d'obturation radiale 166a du couvercle 166, et est destiné à être relié au gicleur 20, dont le corps est fixé sur le couvercle de préférence par serrage approprié sur l'extérieur de la paroi 166i du canal.

Le porte-gicleur'décrit ci-dessus fonctionne de la façon suivante.

lorsque la pompe du dispositif de lavage est arrêtée, aucune pression de fluide n'est appliquée au porte-gicleur par le canal d'arrivée C.

Le ressort 163 tend à prendre sa position dilatée et, en prenant appui sur le collet fixe 160a, sollicite le manchon 162 (vers la droite sur les figures) en agissant sur sa partie terminale radiale 162c, jusqu'à la venue de la partie 166a du couvercle en butée contre l'extrémité libre du tube 160. Cette position est la position escamotée ou rentrée illustrée sur la figure 2, correspondant à la position en traits pleins de la figure 1. On observe que la tige 166d pénètre sur une distance importante dans le tube pour obturer celui-ci.

On observe en outre que l'espace intérieur du tube 160 d'amenée du liquide est séparé de l'extérieur par un trajet sur lequel sont interposés les joints 167, 161 et 164, ce qui garantit une parfaite étanchéité et évite en particulier un phènomène de vidage du réservoir 12 par siphonage.

Lorsque maintenant le liquide de lavage sous pression est appliqué au porte-gicleur, la chambre à volume variable telle que définie par le tube 160 et l'extrémité libre de la tige 166d reçoit cette pression, et tend à repousser ladite tige, et avec elle tout le couvercle 166 et le manchon 162 dont il est solidaire, à l'encontre de la force du ressort 163, pour ainsi déplacer ces éléments vers la gauche sur les figures, ce mouvement étant accompagné d'une compression du ressort.

La tige 166d sort donc progressivement du tube 160, jusqu'à ce que les échancrures 166e, arrivant en bout de tube, commencent à établir une communication entre l'intérieur du tube et l'espace annulaire situé entre le manchon 162 et la tige 166d. Les pressions de chaque côté de ce passage de communication s'équilibrant, le manchon 162 et le couvercle 166 restent dans cette position, illustrée sur la figure 3, qui correspond à la position déployée en tiretés de la figure 1. Le liquide sous pression ayant pénétré dans l'espace annulaire précité est maintenant appliqué au gicleur 20 par l'intermédiaire du canal 166h, et la glace G du projecteur reçoit donc, depuis la position avancée du gicleur, le jet de liquide de lavage.

On comprend que la communication de fluide précitée, grâce aux échancrures 166e, est établie sans que la tige 166d n'ait été complètement dégagée de l'intérieur du tube 160, si bien qu'il n'existe aucun risque de blocage par défaut d'alignement lorsque la pression de liquide de lavage disparaît et que le porte-gicleur tend à reprendre la position de la figure 2.

Dans cette position déployée de lavage, les actions des joints 161 et 164 se combinent pour éviter de façon sûre toute fuite du liquide.

On observe par ailleurs que, en position déployée comme en position escamotée, aucune zone critique ou fragile du porte-gicleur, et en particulier aucune transition entre pièces fixes et pièces mobiles, où l'étanchéité est impérative, n'est directement exposée vers l'avant du véhicule, ce qui confère une étanchéité extrêmement sûre et durable.

Bien entendu, la présente invention n'est nullement limitée à la forme de réalisation décrite ci-dessus et représentée sur les dessins, mais l'homme de l'art saura y apporter toute variante ou modification conforme à son esprit, du moment que cette variante ou modification reste dans le cadre de l'invention, telle que définie par les revendications.

En particulier, la configuration de l'extrémité libre de la tige 166d peut être tout à fait quelconque.

Par ailleurs, bien que les éléments du porte-gicleur tels qu'ils ont été définis plus haut aient été présentés comme des corps de révolution autour de l'axe général A, toute section appropriée peut être choisie pour ces éléments. En particulier, l'homme de l'art saura prévoir toute disposition (méplats, clavettes, etc...) pour éviter toute rotation intempestive de la partie mobile du porte-gicleur par rapport à sa partie fixe.

## Revendications

1. Dispositif de lavage de la glace d'un projecteur de véhicule automobile, du type comportant un gicleur (20) monté sur un porte-gicleur escamotable (16) et alimenté sélectivement par une source de liquide de lavage sous pression (12, 14), le porte-gicleur comportant une chambre à volume variable définie par un élément fixe (160) et un élément mobile (162, 166) capable de coulisser par rapport à l'élément fixe et portant le gicleur, avec un espace intérieur de l'élément mobile en communication avec le gicleur, un moyen de rappel élastique opérant entre l'élément fixe et l'élément mobile, l'alimentation de ladite chambre à volume variable en liquide de lavage sous pression provoquant initialement le mouvement de l'élément mobile à l'encontre du moyen de rappel jusque dans une position déployée puis l'application du liquide de lavage au gicleur, l'élément fixe comprenant un tube (160) ouvert à une extrémité libre et relié à la source de liquide de lavage sous pression à son extrémité opposée, caractérisé en ce que l'élément mobile comprend un corps essentiellement fermé (162, 166), dont un espace intérieur est en communication avec le gicleur et est délimité par une première partie (162) disposée à l'extérieur du tube dans une relation d'étanchéité avec sa surface extérieure et par une deuxième partie (166d) capable de pénétrer dans le tube pour assurer son obturation et de se dégager du tube sous l'action du liquide de lavage sous pression pour établir une communication entre l'intérieur du tube et ledit espace intérieur.

2. Dispositif selon la revendication 1, caractérisé en ce que le moyen de rappel élastique comprend un ressort de compression (163) monté entre ladite première partie (162) de l'élément mobile et le tube (160) et agissant entre un collet (160a) prévu à l'extérieur du tube et une partie terminale (162c) de ladite première partie de l'élément mobile.

3. Dispositif selon la revendication 2, caractérisé en ce que le porte-gicleur (16) comprend un moyen de limitation de la course de l'élément mobile par rapport à l'élément fixe, ledit moyen comprenant le collet (160a), capable de venir en butée contre un épaulement prévu à une surface intérieure de ladite première partie de l'élément mobile.

4. Dispositif selon l'une des revendications 1 à 3, caractérisé en ce qu'un joint d'étanchéité (161) est prévu au voisinage de l'extrémité libre du tube, entre le tube (160) et ladite première partie (162) de l'élément mobile.

5. Dispositif selon la revendication 4, caractérisé en ce que le joint d'étanchéité est un joint à double lèvre (161).

6. Dispositif selon l'une des revendications 1 à 5, caractérisé en ce qu'un joint d'étanchéité (168) est prévu autour de ladite deuxième partie (166d) de l'élément mobile au voisinage d'une extrémité libre de celle-ci de manière à coopérer avec une surface intérieure du tube (160).

7. Dispositif selon l'une des revendications 1 à 6, caractérisé en ce que la première partie de l'élément mobile est définie par un manchon (162) et en ce que deuxième partie de l'élément mobile est définie par une tige (166d) en saillie à partir d'un couvercle (166) fermant le manchon pour définir ledit espace intérieur.

8. Dispositif selon la revendication 7, caractérisé en ce qu'un canal (166h) de communication avec le gicleur est prévu dans ledit couvercle (166).

9. Dispositif selon l'une des revendications 1 à 8, caractérisé en ce que le porte-gicleur (16) comporte en outre un capuchon (165) et un joint d'étanchéité (164) comprimé entre ledit capuchon et une partie terminale de ladite première partie de l'élément mobile et en contact avec la surface extérieure du tube (160).

10. Dispositif selon l'une des revendications 1 à 9, caractérisé en ce que la seconde partie (166d) de l'élément mobile comporte à une extrémité libre tournée vers le tube au moins une échancrure (166e) capable d'établir la communication entre l'intérieur du tube (160) et ledit espace intérieur alors que ladite seconde partie est encore partiellement engagée dans le tube.

11. Dispositif selon la revendication 10, caractérisé en ce qu'il est prévu quatre échancrures (166e) séparées par des cloisons (166f) dont la section présente un motif cruciforme.

## Claims

1. A device for washing the lens of a motor vehicle headlamp, of the type comprising a jet (20) mounted on a retractable jet holder (16) and supplied selectively by a source of pressurised washing liquid (12, 14), the jet holder comprising a chamber having a variable volume defined by a fixed component (160) and a moving component (162, 166) capable of sliding in relation to the fixed component and bearing the jet, with an interior space of the moving component communicating with the jet, an elastic return means operating between the fixed component and the moving component, the supply of the said variable volume chamber with pressurised washing liquid initially causing the movement of the moving component against the return means into an extended position and then the application of the washing liquid to the jet, the fixed component comprising a tube (160) open at a free end and connected to the source of pressurised washing liquid at its opposite end,
**characterised in that** the moving component comprises an essentially closed body (162, 166), an interior space of which communicates with the jet and is delimited by a first part (162) disposed outside the tube in a sealed relationship with its outer surface and by a second part (166d) capable of penetrating into the tube to ensure its closure and to become disengaged from the tube under the action of the pressurised washing liquid to establish communication between the interior of the tube and the said interior space.

2. A device according to Claim 1,
**characterised in that** the elastic return means comprises a compression spring (163) mounted between the said first part (162) of the moving component and the tube (160) and acting between a flange (160a) provided outside the tube and an end part (162c) of the said first part of the moving component.

3. A device according to Claim 2,
**characterised in that** the jet holder (16) comprises a means for limiting the travel of the moving component in relation to the fixed component, the said means comprising the flange (160a), which is able to come to stop against a shoulder provided at an inner surface of the said first part of the moving component.

4. A device according to one of Claims 1 to 3,
**characterised in that** a seal (161) is provided in the vicinity of the free end of the tube, between the tube (160) and the said first part (162) of the moving component.

5. A device according to Claim 4,
**characterised in that** the seal is a double-lipped joint (161).

6. A device according to one of Claims 1 to 5,
**characterised in that** a seal (168) is provided around the said second part (166d) of the moving component in the vicinity of a free end thereof so as to cooperate with an inner surface of the tube (160).

7. A device according to one of Claims 1 to 6,
**characterised in that** the first part of the moving component is defined by a sleeve (162),
**and in that** the second part of the moving component is defined by a rod (166d) protruding from a cover (166) closing the sleeve to define the said interior space.

8. A device according to Claim 7,
**characterised in that** a duct (166h) communicating with the jet is provided in said cover (166).

9. A device according to one of Claims 1 to 8,
**characterised in that** the jet holder (16) also comprises a cap (165) and a seal (164) compressed between said cap and an end part of the said first part of the moving component and in contact with the outer surface of the tube (160).

10. A device according to one of Claims 1 to 9,
**characterised in that** the second part (166d) of the moving component comprises, at a free end turned towards the tube, at least one cut-out portion (166e) capable of establishing communication between the interior of the tube (160) and the said interior space when the said second part is still partially engaged in the tube.

11. A device according to Claim 10,
**characterised in that** four cut-out portions (166e) separated by partitions (166f), the section of which has a cruciform pattern, are provided.

## Patentansprüche

1. Waschvorrichtung für Abdeckscheiben von Kraftfahrzeugleuchten in der Ausführung mit einer Düse (20), die auf einem einziehbaren Düsenhalter (16) angebracht ist und die wahlweise durch eine Quelle mit unter Druck stehender Waschflüssigkeit (12, 14) versorgt wird, wobei der Düsenhalter eine Kammer mit veränderlichem Volumen umfaßt, die durch ein feststehendes Element (160) und ein bewegliches Element (162, 166) gebildet wird, welches im Verhältnis zu dem feststehenden Element gleitend verschiebbar ist und die Düse trägt, mit einem mit der Düse in Verbindung stehenden Innenraum des beweglichen Elements, sowie ein elastisches Rückstellmittel, das zwischen dem feststehenden Element und dem beweglichen Element wirksam ist, wobei die Zuleitung von unter Druck stehender Waschflüssigkeit zu der Kammer mit veränderlichem Volumen zunächst die Bewegung des beweglichen Elements gegen das Rückstellmittel bis zu einer ausgefahrenen Position und anschließend die Anwendung der Waschflüssigkeit auf die Düse bewirkt und wobei das feststehende Element ein Rohr (160) umfaßt, das an einem freien Ende offen und an seinem entgegengesetzten Ende mit der Quelle der unter Druck stehenden Waschflüssigkeit verbunden ist , **dadurch gekennzeichnet,** daß das bewegliche Element einen im wesentlichen geschlossenen Körper (162, 166) mit einem Innenraum umfaßt, der mit der Düse in Verbindung steht und durch einen ersten Teil (162) begrenzt wird, der außerhalb des Rohres in einer Dichtungsbeziehung mit seiner Außenfläche angeordnet ist, sowie durch einen zweiten Teil (166d), der in das Rohr eindringen kann, um seinen Verschluß herbeizuführen, und der unter der Einwirkung der unter Druck stehenden Waschflüssigkeit aus dem Rohr austreten kann, um eine Verbindung zwischen dem Innern des Rohres und dem besagten Innenraum herzustellen.

2. Vorrichtung nach Anspruch 1 , **dadurch gekennzeichnet,** daß das elastische Rückstellmittel eine Druckfeder (163) umfaßt, die zwischen dem besagten ersten Teil (162) des beweglichen Elements und dem Rohr (160) eingesetzt ist und die zwischen einem außen an dem Rohr vorgesehenen Kragen (160a) und einem Endteil (162c) des besagten ersten Teils des beweglichen Elements wirksam ist.

3. Vorrichtung nach Anspruch 2 , **dadurch gekennzeichnet,** daß der Düsenhalter (16) ein Mittel zur Begrenzung des Hubs des beweglichen Elements im Verhältnis zu dem feststehenden Element enthält, wobei dieses Mittel den Kragen (160a) umfaßt, der an einer Schulter anschlagen kann, welche an einer Innenfläche des besagten ersten Teils des beweglichen Elements vorgesehen ist.

4. Vorrichtung nach einem der Ansprüche 1 bis 3, **dadurch gekennzeichnet,** daß eine Dichtung (161) in der Nähe des freien Endes des Rohrs zwischen dem Rohr (160) und dem besagten ersten Teil (162) des beweglichen Elements vorgesehen ist.

5. Vorrichtung nach Anspruch 4 , **dadurch gekennzeichnet,** daß es sich bei dieser Dichtung um eine Doppellippendichtung (161) handelt.

6. Vorrichtung nach einem der Ansprüche 1 bis 5, **dadurch gekennzeichnet,** daß eine Dichtung (168) um den besagten zweiten Teil (166d) des beweglichen Elements in der Nähe eines freien Endes dieses Teils vorgesehen ist, um mit einer Innenfläche des Rohrs (160) zusammenzuwirken.

7. Vorrichtung nach einem der Ansprüche 1 bis 6, **dadurch gekennzeichnet,** daß der erste Teil des beweglichen Elements durch eine Hülse (162) gebildet wird und daß der zweite Teil des beweglichen Elements durch einen Schaft (166d) gebildet wird, der von einem Deckel (166) aus vorspringt, welcher die Hülse verschließt, um den besagten Innenraum zu begrenzen.

8. Vorrichtung nach Anspruch 7 , **dadurch gekennzeichnet,** daß ein Kanal (166h) zur Verbindung mit der Düse in dem besagten Deckel (166) vorgesehen ist.

9. Vorrichtung nach einem der Ansprüche 1 bis 8, **dadurch gekennzeichnet,** daß der Düsenhalter (16) außerdem eine Kappe (165) und eine Dichtung (164) umfaßt, die zwischen der besagten Kappe und einem Endteil des besagten ersten Teils des beweglichen Elements unter Anlage an der Außenfläche des Rohres (160) zusammengedrückt wird.

10. Vorrichtung nach einem der Ansprüche 1 bis 9, **dadurch gekennzeichnet,** daß der zweite Teil (166d) des beweglichen Elements an einem zu dem Rohr hin gerichteten Ende mindestens eine Aussparung (166e) umfaßt, welche die Verbindung zwischen dem Innern des Rohres (160) und dem besagten Innenraum herstellen kann, während der besagte zweite Teil noch teilweise in das Rohr eingreift.

11. Vorrichtung nach Anspruch 10, **dadurch gekennzeichnet,** daß vier Aussparungen (166e) vorgesehen sind, die durch Trennwände (166f) voneinander getrennt werden, deren Querschnitt eine kreuzförmige Gestalt aufweist.
